# EUROPEAN PATENT APPLICATION

(11) **EP 4 265 683 A1**
(43) Date of publication of application: **25.10.2023**
(21) Application number: 22856297.1
(22) Date of filing: 12.08.2022
(51) Int. Cl.: C08L 51/04, C08L 63/00, C08F 279/02, C08F 222/10, C08F 212/08, C08G 59/42

(54) **GRAFT COPOLYMER COMPOSITION, CURABLE RESIN COMPOSITION COMPRISING SAME, AND METHODS FOR PREPARING COMPOSITIONS**

(30) Priority: 13.08.2021 KR 20210107588
(71) Applicant: Lg Chem, Ltd., Seoul 07336 (KR)
(72) Inventor: JEONG, Min Ah, Daejeon 34122 (KR); YOO, Ki Hyun, Daejeon 34122 (KR); HAN, Sang Hoon, Daejeon 34122 (KR); KIM, Yong Kyun, Daejeon 34122 (KR)
(74) Representative: Hoffmann Eitle
(86) International application number: PCT/KR2022/012132
(87) International publication number: WO 2023/018304

(57) **Abstract**

The present invention relates to a graft copolymer, and to a graft copolymer composition having excellent particulate dispersibility in a curable resin such as an epoxy resin and is applicable as a particulate impact reinforcing agent, a curable resin composition including same, and methods of preparing them.

## Description

### TECHNICAL FIELD

### [Cross-reference to Related Applications]

The present application claims the benefit of priority based on Korean Patent Application No. 10-2021-0107588, filed on August 13, 2021, the entire contents of which are incorporated herein by reference.

### [Technical Field]

The present invention relates to a graft copolymer composition which has excellent particulate dispersibility with respect to a curable resin such as an epoxy resin and may be applied as an impact reinforcing agent with a particulate phase, a curable resin composition comprising same, and methods of preparing them.

### BACKGROUND ART

Curable resins represented by an epoxy resin are used in various fields including electrical and electronic products, automotive parts, building materials, or the like. The curable resin is used together with an additive including an inorganic filler, a release agent, rubber particulates having rubbery properties, or the like, rather than being used alone to supplement physical properties, processability, or the like. Among the curable resins, the epoxy resin often shows brittle characteristics, and improvement of impact resistance or adhesion strength is required.

As a method of improving the impact resistance of the epoxy resin, a method of using together with a graft copolymer including a rubbery polymer as an impact reinforcing agent has been suggested. The graft copolymer has the particle shape of a core-shell structure including a core including a rubbery polymer and a shell formed on the core through graft polymerization.

Here, in order to apply the graft copolymer as an impact reinforcing agent for an epoxy resin, the graft copolymer is required to disperse in the epoxy resin, and as a method of dispersing the graft copolymer in the epoxy resin, there are a liquid phase dispersion method and a particulate phase dispersion method.

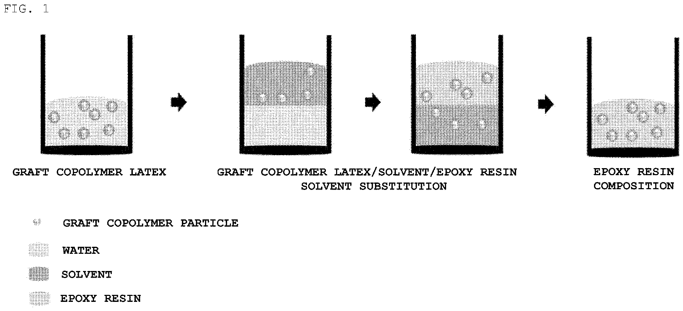

By the liquid phase dispersion method, as shown in FIG. 1, a graft copolymer is dispersed in an epoxy resin by a stepwise solvent substitution method, wherein, in a graft copolymer in a latex state in which the graft copolymer is dispersed in water, the water is substituted with a solvent, and the solvent is substituted with an epoxy resin. Such a liquid phase dispersion method has merits of dispersing the graft copolymer in a homogeneous dispersion matrix of an epoxy resin. However, there are storage problems of storing the graft copolymer in a latex state until being dispersed in order to apply the graft copolymer to the epoxy resin as the impact reinforcing agent, and problems in environmental respects due to the water and the solvent, separately discharged from the substitution process of the graft copolymer and the solvent.

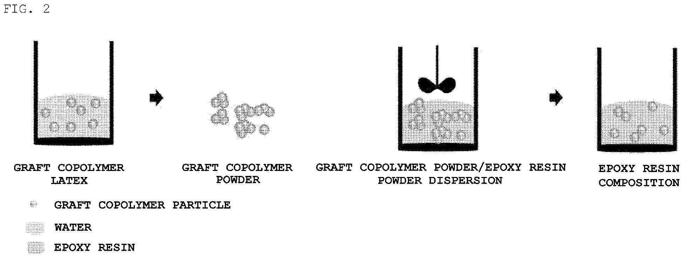

By the particulate phase dispersion method, as shown in FIG. 2, there are merits of low process costs in view of directly dispersing an agglomerated dry powder from a graft copolymer latex, i.e., a particulate phase graft copolymer in an epoxy resin. However, there are problems of substantially very difficult or impossible dispersion of the graft copolymer particulate material when directly introducing into an epoxy resin, because the viscosity of the graft copolymer particulate material becomes very high.

Accordingly, in the application of an impact reinforcing agent to a curable resin composition such as an epoxy resin, in order to improve both processing cost and environmental aspects, and in order to apply the particulate phase dispersion method, the improvement of the particulate dispersibility of a graft copolymer particulate material is required.

### [Prior Art Document]

### [Patent Document]

(Patent Document 1) JP 2006-104328 A

### DISCLOSURE OF THE INVENTION

### TECHNICAL PROBLEM

The present invention has been made to solve the above-described problems of the conventional technique, and has an object of providing a graft copolymer composition which has excellent particulate dispersibility in a curable resin such as an epoxy resin and may be applied as a particulate phase impact reinforcing agent, and a method of preparing same.

In addition, another object of the present invention is to provide a curable resin composition in which the graft copolymer composition is applied in a particulate phase, and a method of preparing same.

### TECHNICAL SOLUTION

In order to solve the above-described tasks, the present invention provides a graft copolymer composition, a curable resin composition, and a method of preparing a curable resin composition.
1) The present invention provides a graft copolymer composition comprising multiple graft copolymers having different core particle diameters, wherein the graft copolymer is a core-shell type graft copolymer comprising: a core comprising a rubbery polymer; and a shell formed by graft polymerizing a graft monomer comprising an alkyl (meth)acrylate-based monomer to the rubbery polymer, the multiple graft copolymers comprise the core in 75 wt% to 90 wt%, and a number of rubbery particles observed by enlarging at 15,000 magnification using a transmission electron microscope of a specimen in which 8 parts by weight of a dispersion phase comprising a graft copolymer composition is dispersed based on 100 parts by weight of a continuous phase comprising a curable resin, is from 200 to 500.
2) The present invention provides a graft copolymer composition comprising multiple graft copolymers having different core particle diameters, wherein the graft copolymer is a core-shell type graft copolymer comprising: a core comprising a rubbery polymer; and a shell formed by graft polymerizing a graft monomer comprising an alkyl (meth)acrylate-based monomer to the rubbery polymer, the multiple graft copolymers comprise the core in 75 wt% to 90 wt%, and the core satisfies particle diameter distribution measured by capillary hydrodynamic fractionation (CHDF) as the following (1) to (3):
   (1) core particles having particle diameters of 30 nm to less than 100 nm are from 0 wt% to 4 wt%,
   (2) core particles having particle diameters of 100 nm to less than 350 nm are from 50 wt% to 94 wt%, and
   (3) core particles having particle diameters of 350 nm to 550 nm are from 6 wt% to 50 wt%.
3) The present invention provides the graft copolymer composition according to 1) above, wherein the core satisfies particle diameter distribution measured by capillary hydrodynamic fractionation (CHDF) as the following (1) to (3):
   (1) core particles having particle diameters of 30 nm to less than 100 nm are from 0 wt% to 4 wt%,
   (2) core particles having particle diameters of 100 nm to less than 350 nm are from 50 wt% to 94 wt%, and
   (3) core particles having particle diameters of 350 nm to 550 nm are from 6 wt% to 50 wt%.
4) The present invention provides the graft copolymer composition according to any one of 1) to 3) above, wherein the rubbery polymer comprises one or more monomer units selected from the group consisting of a conjugated diene-based monomer unit and an alkyl acrylate-based monomer unit.
5) The present invention provides the graft copolymer composition according to any one of 1) to 4) above, wherein the graft monomer comprises a methyl (meth)acrylate monomer, an alkyl (meth)acrylate-based monomer of 2 to 12 carbon atoms and a crosslinkable monomer.
6) The present invention provides the graft copolymer composition according to 5) above, wherein the crosslinkable monomer is polyethylene glycol diacrylate or allyl methacrylate.
7) The present invention provides the graft copolymer composition according to any one of 1) to 6) above, wherein the graft monomer further comprises an aromatic vinyl-based monomer.
8) The present invention provides the graft copolymer composition according to any one of 1) to 7) above, wherein the multiple graft copolymers comprise the core in 75 wt% to 85 wt% and the shell in 15 wt% to 25 wt%.
9) The present invention provides the graft copolymer composition according to any one of 1) to 8) above, wherein the multiple graft copolymers have an average core particle diameter of 250 nm to 350 nm.
10) The present invention provides the graft copolymer composition according to any one of 1) to 9) above, wherein particle diameter distribution of the rubbery particles observed by enlarging at 15,000 magnification using a transmission electron microscope of a specimen in which 8 parts by weight of a dispersion phase comprising a graft copolymer composition is dispersed based on 100 parts by weight of a continuous phase comprising a curable resin, satisfies the following:
   (4) rubbery particles having particle diameters of 30 nm to less than 100 nm are from 0 count% to 5 count%,
   (5) rubbery particles having particle diameters of 100 nm to less than 350 nm are from 50 count% to 95 count%, and
   (6) rubbery particles having particle diameters of 350 nm to 550 nm are from 5 count% to 50 count%.
11) The present invention provides the graft copolymer composition according to any one of 1) to 10) above, wherein the curable resin is an epoxy resin.
12) The present invention provides a curable resin composition comprising a continuous phase and a dispersion phase, wherein the continuous phase comprises a curable resin, and the dispersion phase comprises the graft copolymer composition according to any one of 1) to 11) above.
13) The present invention provides the curable resin composition according to 12) above, wherein the curable resin composition comprises the continuous phase in 50 wt% to 99 wt% and the dispersion phase in 1 wt% to 50 wt%.
14) The present invention provides a method of preparing a curable composition, the method comprising: a step of preparing a graft copolymer latex comprising the graft copolymer composition according to any one of 1) to 10) above (S10); a step of agglomerating and drying the graft copolymer latex prepared in step (S10) to prepare a graft copolymer particulate material (S20); and a step of mixing a curable resin and the graft copolymer particulate material prepared in step (S20) to prepare a curable resin composition (S30), wherein step (S30) is performed by dispersing using a stirrer.
15) The present invention provides the method of preparing a curable resin composition of 14) above, wherein a viscosity of the curable resin composition prepared in step (S30) is 2,000 Pa.s or less at 25°C.

### ADVANTAGEOUS EFFECTS

The graft copolymer composition of the present invention has excellent particulate dispersibility in a curable resin such as an epoxy resin, and shows dispersing effects in a curable resin composition by a particulate phase dispersion method.

The curable resin composition of the present invention could apply a graft copolymer composition in a particulate phase as an impact reinforcing agent, and shows effects of excellent mechanical properties such as impact resistance due to the graft copolymer composition dispersed in the curable resin composition.

### BRIEF DESCRIPTION OF DRAWINGS

FIG. 1 is a process diagram briefly showing a liquid phase dispersion method for dispersing a graft copolymer composition in an epoxy resin.
FIG. 2 is a process diagram briefly showing a particulate phase dispersion method for dispersing a graft copolymer composition in an epoxy resin.
FIG. 3 is an image taken at 15,000 magnification using a transmission electron microscope on a specimen in which 8 parts by weight of a dispersion phase including a graft copolymer composition based on 100 parts by weight of a continuous phase including a curable resin prepared in Example 1 of the present invention.

### BEST MODE FOR CARRYING OUT THE INVENTION

Hereinafter, the present invention will be described in more detail to assist the understanding of the present invention.

It will be understood that words or terms used in the description and claims of the present invention shall not be interpreted as the meaning defined in commonly used dictionaries. It will be understood that the words or terms should be interpreted as having a meaning that is consistent with their meaning in the technical idea of the invention, based on the principle that an inventor may properly define the meaning of the words to best explain the invention.

The term "monomer unit" in the present invention may represent a component or a structure derived from the monomer or the material itself, in a particular embodiment, may mean a repeating unit formed in the polymer during polymerizing a polymer through the participation of the monomer injected in polymerization reaction.

The term "composition" used in the present invention includes a reaction product and a decomposition product formed from the materials of a corresponding composition as well as a mixture of materials including the corresponding composition.

The present invention provides a graft copolymer composition which may be applied as an impact reinforcing agent to a curable resin composition. The graft copolymer composition according to the present invention has improved particulate dispersibility with respect to a curable resin such as an epoxy resin, and is a graft copolymer composition including multiple graft copolymers having different core particle diameters, wherein the graft copolymer is a core-shell type graft copolymer including a core including a rubbery polymer; and a shell formed by graft polymerizing a graft monomer including an alkyl (meth)acrylate-based monomer to the rubbery polymer, the multiple graft copolymers include the core in 75 wt% to 90 wt%, and a number of rubbery particles observed by enlarging at 15,000 magnification using a transmission electron microscope of a specimen in which 8 parts by weight of a dispersion phase including a graft copolymer composition is dispersed based on 100 parts by weight of a continuous phase including a curable resin, may be from 200 to 500. The number of the rubbery particles observed using the transmission electron microscope on the specimen may mean particulate dispersibility when dispersing a graft copolymer in a curable resin composition by a particulate phase dispersion method, and if the number of the rubbery particles satisfies the above-described range, it could be considered that the particulate dispersibility of the graft copolymer composition in a curable resin such as an epoxy resin is excellent.

According to an embodiment of the present invention, the graft copolymer composition includes the multiple graft copolymers having different core particle diameters, and the graft copolymer is a core-shell type graft copolymer including a core including a rubbery polymer; and a shell formed by graft polymerizing a graft monomer including an alkyl (meth)acrylate-based monomer to the rubbery polymer. The multiple graft copolymers may include the core in 75 wt% to 90 wt%, and the core may satisfy particle diameter distribution measured by capillary hydrodynamic fractionation (CHDF) of (1) to (3) below, and accordingly, it is possible to disperse the graft copolymers in a curable resin composition by a particulate phase dispersion method.
(1) core particles having particle diameters of 30 nm to less than 100 nm are from 0 wt% to 4 wt%,
(2) core particles having particle diameters of 100 nm to less than 350 nm are from 50 wt% to 94 wt%, and
(3) core particles having particle diameters of 350 nm to 550 nm are from 6 wt% to 50 wt%.

According to an embodiment of the present invention, the graft copolymer composition may simultaneously satisfy that the number of rubber particles observed by enlarging at 15,000 magnification using a transmission electron microscope of 200 to 500 for a specimen in which 8 parts by weight of a dispersion phase including the graft copolymer composition is dispersed based on 100 parts by weight of a continuous phase including a curable resin, the multiple graft copolymers include the core in 75 wt% to 90 wt%, and the core satisfies the particle diameter distribution measured by capillary hydrodynamic fractionation (CHDF) of (1) to (3) above.

According to an embodiment of the present invention, the number of rubber particles observed by enlarging at 15,000 magnification using a transmission electron microscope for a specimen in which 8 parts by weight of a dispersion phase including the graft copolymer composition is dispersed based on 100 parts by weight of a continuous phase including a curable resin, may be 200 or more, 210 or more, 220 or more, 230 or more, 240 or more, 250 or more, 260 or more, 270 or more, 280 or more, 290 or more, 300 or more, 350 or more, 400 or more, or 450 or more, and 500 or less, 490 or less, 480 or less, 470 or less, 460 or less, 450 or less, 400 or less, 350 or less, 300 or less, 290 or less, 280 or less, 270 or less, 260 or less, or 250 or less. The range relates to a suitable range of the number of rubber particles in case of dispersing the graft copolymer composition in a continuous phase including a curable resin, and within this range, distance among rubber particles dispersed in a curable resin composition including the graft copolymer composition in a dispersion phase could be most effectively controlled, and excellent effects of both dispersion viscosity and mechanical properties may be achieved.

According to an embodiment of the present invention, in the core-shell type graft copolymer, the core may mean the graft copolymer or the rubbery polymer component itself forming a core or a core layer, and the shell may mean a polymer component or a copolymer component forming a shell or a shell layer in a shell type wrapping the core by graft polymerization to the rubbery polymer. That is, the core including the rubbery polymer may be the rubbery polymer itself, and the shell may mean a graft layer formed by graft polymerization of a graft monomer to the rubbery polymer.

According to an embodiment of the present invention, if the graft copolymer composition is applied as an impact reinforcing agent, the rubbery polymer is a component for providing impact resistance and may include one or more monomer units selected from the group consisting of a conjugated diene-based monomer unit and an alkyl acrylate-based monomer unit. In a particular embodiment, the rubbery polymer may be a conjugated diene-based rubbery polymer or an acryl-based rubbery polymer. In a more particular embodiment, the conjugated diene-based rubbery polymer may be one or more selected from the group consisting of a homopolymer of a conjugated diene-based monomer and a copolymer of aromatic vinyl-based monomer-conjugated diene-based monomer, and the acryl-based rubbery polymer may be a homopolymer of an alkyl acrylate-based monomer.

According to an embodiment of the present invention, the conjugated diene-based monomer of the rubbery polymer may be one or more selected from the group consisting of 1,3-butadiene, 2,3-dimehtyl-1,3-butadiene, piperylene, 3-butyl-1,3-octadiene, isoprene and 2-phenyl-1,3-butadiene, particularly, 1,3-butadiene.

According to an embodiment of the present invention, the aromatic vinyl-based monomer of the rubbery polymer may be one or more selected from the group consisting of styrene, α-methylstyrene, 3-methylstyrene, 4-methylstyrene, 4-propylstyrene, 1-vinylnaphthalene, 4-cyclohexylstyrene, 4-(p-methylphenyl)styrene and 1-vinyl-5-hexylnaphthalene, particularly, styrene.

According to an embodiment of the present invention, the alkyl acrylate-based monomer of the rubbery polymer may be an alkyl acrylate-based monomer of 1 to 12 carbon atoms, particularly, one or more selected from the group consisting of methyl acrylate, ethyl acrylate, propyl acrylate and n-butyl acrylate, more particularly, n-butyl acrylate.

According to an embodiment of the present invention, if the graft copolymer composition is applied as an impact reinforcing agent, the shell is a component for improving compatibility and mechanical properties and may be a graft layer formed by graft polymerizing a graft monomer to the rubbery polymer, as described above. In a particular embodiment, the graft monomer graft polymerized to the rubbery polymer for forming the shell, may include an alkyl (meth)acrylate-based monomer.

According to an embodiment of the present invention, the alkyl (meth)acrylate-based monomer of the graft monomer may be an alkyl (meth)acrylate-based monomer of 1 to 12 carbon atoms, particularly, one or more selected from the group consisting of methyl methacrylate, ethyl methacrylate, propyl methacrylate, n-butyl methacrylate, methyl acrylate, ethyl acrylate, propyl acrylate and n-butyl acrylate.

According to an embodiment of the present invention, the alkyl (meth)acrylate-based monomer of the graft monomer may be two or more monomers selected from the group consisting of alkyl (meth)acrylate-based monomers of 1 to 12 carbon atoms, particularly, two or more selected from the group consisting of methyl methacrylate, ethyl methacrylate, propyl methacrylate, n-butyl methacrylate, methyl acrylate, ethyl acrylate, propyl acrylate and n-butyl acrylate.

According to an embodiment of the present invention, the alkyl (meth)acrylate-based monomer of the graft monomer may be a methyl (meth)acrylate monomer, and an alkyl (meth)acrylate-based monomer of 2 to 12 carbon atoms, and in this case, the weight average molecular weight of the shell may be reduced even further. Accordingly, the swelling of the shell during dispersing the graft copolymer in the curable resin may be minimized to prevent the increase of a viscosity. In this case, the alkyl (meth)acrylate-based monomer may include: 50 wt% to 99 wt%, 60 wt% to 90 wt%, or 70 wt% to 85 wt% of the methyl (meth)acrylate monomer; and 1 wt% to 50 wt%, 10 wt% to 40 wt%, or 15 wt% to 30 wt% of the alkyl (meth)acrylate-based monomer of 2 to 12 carbon atoms.

According to an embodiment of the present invention, the graft monomer may further include a crosslinkable monomer in addition to the alkyl (meth)acrylate-based monomer. That is, the graft monomer may include a methyl (meth)acrylate monomer, an alkyl (meth)acrylate-based monomer of 2 to 12 carbon atoms and a crosslinkable monomer.

According to an embodiment of the present invention, the crosslinkable monomer is for improving shell forming capacity by crosslinking during forming the shell by the graft monomer and at the same time, for further improving compatibility and mechanical properties by the shell, and may be one or more selected from a (meth)acryl-based crosslinkable monomer such as ethylene glycol di(meth)acrylate, polyethylene glycol di(meth)acrylate, 1,6-hexanediol di(meth)acrylate, allyl (meth)acrylate, trimethylolpropane tri(meth)acrylate and pentaerythritol tetra(meth)acrylate; and a vinyl-based crosslinkable monomer such as divinylbenzene, divinylnaphthalene and diallyl phthalate, particularly, polyethylene glycol diacrylate or allyl methacrylate.

According to an embodiment of the present invention, the graft monomer may further include an aromatic vinyl-based monomer. That is, the graft monomer may include a methyl (meth)acrylate monomer, an alkyl (meth)acrylate-based monomer of 2 to 12 carbon atoms and an aromatic vinyl-based monomer.

According to an embodiment of the present invention, the aromatic vinyl-based monomer of the graft monomer may be one or more selected from the group consisting of styrene, α-methylstyrene, 3-methylstyrene, 4-methylstyrene, 4-propylstyrene, 1-vinylnaphthalene, 4-cyclohexylstyrene, 4-(p-methylphenyl)styrene and 1-vinyl-5-hexylnaphthalene, particularly, styrene.

According to an embodiment of the present invention, if the graft monomer further includes an aromatic vinyl-based monomer, the aromatic vinyl-based monomer may be included in 0.1 wt% to 10.0 wt%, 0.5 wt% to 5.0 wt%, or 0.8 wt% to 2.0 wt% based on the total amount of the graft monomer.

In the graft copolymer composition according to the present invention, in order to make its dispersion possible in a curable resin composition by a particulate phase dispersion method, it is very important to control the amount of the core and the particle diameter distribution of the core in the multiple graft copolymers having different core particle diameters, included in the graft copolymer composition.

According to an embodiment of the present invention, the multiple graft copolymers may include the core in 75 wt% to 90 wt%. Particularly, the multiple graft copolymers may include the core in 75 wt% or more, 76 wt% or more, 77 wt% or more, 78 wt% or more, 79 wt% or more, or 80 wt% or more, and 90 wt% or less, 89 wt% or less, 88 wt% or less, 87 wt% or less, 85 wt% or less, 84 wt% or less, 83 wt% or less, 82 wt% or less, 81 wt% or less, or 80 wt% or less. Accordingly, the multiple graft copolymers may include the shell in 10 wt% or more, 11 wt% or more, 12 wt% or more, 13 wt% or more, 14 wt% or more, 15 wt% or more, 16 wt% or more, 17 wt% or more, 18 wt% or more, 19 wt% or more, or 20 wt% or more, and 25 wt% or less, 24 wt% or less, 23 wt% or less, 22 wt% or less, 21 wt% or less, or 20 wt% or less. Within this range, if the graft copolymer composition is dispersed in the curable resin, the swelling of the shell may be minimized to prevent the increase of a viscosity, while sufficiently securing the compatibility of the curable resin and the graft copolymer composition. On the contrary, if the graft copolymer composition includes the core in an amount less than the above-described range, the amount of the shell in the graft copolymer may be inevitably increased by that much, and accordingly, there are problems of arising the swelling of the shell having high affinity with the curable resin, increasing a viscosity and degrading dispersibility. In addition, if the graft copolymer composition includes the core in an amount greater than the above-described range, the compatibility of the curable resin and the graft copolymer composition may drop sharply, and the increase of the viscosity due to the swelling of the shell may be prevented. However, there are problems of not achieving dispersion substantially. Meanwhile, the amounts of the core and the shell may be derived from the amount ratio of the rubbery polymer and graft monomer, injected during preparing the graft copolymer composition.

According to an embodiment of the present invention, the multiple graft copolymers may have different core particle diameters, and such cores may have particle diameter distribution measured by capillary hydrodynamic fractionation (CHDF), satisfying (1) to (3) above.

According to an embodiment of the present invention, condition (1) represents the distribution on the contents of the core particles having small particle diameters, having particle diameters of from 30 nm to less than 100 nm, and the core particles having particle diameters of from 30 nm to less than 100 nm may be 0 wt% or more, 1 wt% or more, 2 wt% or more, or 3 wt% or more and 4 wt% or less, 3 wt% or less, 2 wt% or less, 1 wt% or less, or 0 wt%. Like this, in the multiple graft copolymers having different core particle diameters, if condition (1) is satisfied among the particle diameter distribution of the core, effects of reducing viscosity during dispersing the graft copolymer composition in a curable resin may be achieved by minimizing or not including the core particles having small particle diameters. Here, the range of the core particles having small particle diameters is referred to as from 30 nm to less than 100 nm, but the particle diameter range does not exclude the core particles having small particle diameters of less than 30 nm, but represents the particle diameter range of the core particles having small particle diameters showing the minimum particle diameter among the core particles.

According to an embodiment of the present invention, condition (2) represents the distribution on the contents of core particles having medium particle diameters, having particle diameters of from 100 nm to less than 350 nm, and the core particles having particle diameters of from 100 nm to less than 350 nm may be 50 wt% or more, 55 wt% or more, 60 wt% or more, 65 wt% or more, 70 wt% or more, 75 wt% or more, 80 wt% or more, 85 wt% or more, or 90 wt% or more, and 94 wt% or less, 93 wt% or less, 92 wt% or less, 91 wt% or less, 90 wt% or less, 85 wt% or less, 80 wt% or less, 75 wt% or less, 70 wt% or less, 65 wt% or less, 60 wt% or less, or 55 wt% or less. Like this, if the multiple graft copolymers having different core particle diameters satisfy condition (2) among the particle diameter distribution of the core, balance between viscosity and mechanical properties may be optimized during dispersing the graft copolymer composition in the curable resin.

According to an embodiment of the present invention, condition (3) represents the distribution on the contents of core particles having large particle diameters, having particle diameters of from 350 nm to 550 nm, and the core particles having particle diameters of from 350 nm to 550 nm may be 6 wt% or more, 7 wt% or more, 8 wt% or more, 9 wt% or more, 10 wt% or more, 15 wt% or more, 20 wt% or more, 25 wt% or more, 30 wt% or more, 35 wt% or more, 40 wt% or more, or 45 wt% or more and 50 wt% or less, 45 wt% or less, 40 wt% or less, 35 wt% or less, 30 wt% or less, 25 wt% or less, 20 wt% or less, 15 wt% or less, 10 wt% or less, 9 wt% or less, 8 wt% or less, or 7 wt% or less. Like this, if the multiple graft copolymers having different core particle diameters satisfy condition (3) among the particle diameter distribution of the core, distance among particles may increase to prevent the deterioration of mechanical properties due to a region absent from the graft copolymer composition during dispersing the graft copolymer composition in the curable resin. Here, the range of the core particles having large particle diameters is referred to as from 350 nm to 550 nm, but the particle diameter range does not exclude the core particles having large particle diameters, having particle diameters of greater than 550 nm, but represents the particle diameter range of the core particles having large particle diameters showing the maximum particle diameter among the core particles.

According to an embodiment of the present invention, the core may have an average particle diameter of 250 nm to 350 nm, and particularly, the average particle diameter may be 250 nm or more, 260 nm or more, 270 nm or more, 280 nm or more, 290 nm or more, or 295 nm or more, and 350 nm or less, 340 nm or less, 335 nm or less, 330 nm or less, 325 nm or less, 320 nm or less, 315 nm or less, 310 nm or less, 305 nm or less, or 300 nm or less. Within this range, the production of agglomeration among small particles during dispersing the graft copolymer composition in the curable resin may be prevented, and the deterioration of dispersibility according to the increase of viscosity may be prevented.

As described above, if the amount of the core and the particle diameter distribution of the core in the multiple graft copolymers having different core particle diameters included in the graft copolymer composition according to the present invention are controlled, dispersion by a particulate phase dispersion method in a curable resin composition may become possible.

According to an embodiment of the present invention, the multiple graft copolymers may have an average particle diameter of 250 nm to 500 nm, 250 nm to 450 nm, or 250 nm to 400 nm, and within this range, the increase of viscosity during dispersing the graft copolymer in the curable resin may be prevented.

According to an embodiment of the present invention, the graft copolymer composition may have the particle diameter distribution of the rubbery particles, observed by enlarging at 15,000 magnification by a transmission electron microscope on a specimen in which 8 parts by weight of a dispersion phase including a graft copolymer composition is dispersed based on 100 parts by weight of a continuous phase including a curable resin, satisfying (4) to (6) below. In this case, the rubbery particles may be derived from the cores in the graft copolymer composition included in a dispersion phase, and the particle diameter distribution of the rubbery particles may be controlled by the particle diameter distribution of the cores in the graft copolymer composition included in the dispersion phase.
(4) rubbery particles having particle diameters of 30 nm to less than 100 nm are from 0 count% to 5 count%,
(5) rubbery particles having particle diameters of 100 nm to less than 350 nm are from 50 count% to 95 count%, and
(6) rubbery particles having particle diameters of 350 nm to 550 nm are from 5 count% to 50 count%.

According to an embodiment of the present invention, condition (4) represents the distribution on the rubbery particle content of small particle diameters, having particle diameters of from 30 nm to less than 100 nm, and the rubbery particles having particle diameters of from 30 nm to less than 100 nm may be 0 count% or more, 1 count% or more, 2 count% or more, or 3 count% or more and 5 count% or less, 4 count% or less, 3 count% or less, or 2 count% or less. This range relates to the range of the suitable number of the rubbery particles having small particle diameters among the rubbery particles dispersed in case of dispersing the graft copolymer composition in a continuous phase including a curable resin. If condition (4) is satisfied among the particle diameter distribution of the rubbery particles, effects of minimizing the content of the rubbery particles having small particle diameters in the curable resin composition or reducing viscosity by not being included, may be achieved. Here, the range of the core particles having small particle diameters is referred to as from 30 nm to less than 100 nm, but the particle diameter range does not exclude the rubbery particles of small particle diameters, having particle diameters of less than 30 nm, but represents the particle diameter range of the rubbery particles of small particle diameters showing the minimum particle diameter among the rubbery particles.

According to an embodiment of the present invention, condition (5) represents the distribution on the rubbery particle content of medium particle diameters, having particle diameters of from 100 nm to less than 350 nm, and the rubbery particles having particle diameters of from 100 nm to less than 350 nm may be 50 count% or more, 55 count% or more, 60 count% or more, 65 count% or more, 70 count% or more, 75 count% or more, 80 count% or more, 85 count% or more, or 90 count% or more, and 95 count% or less, 94 count% or less, 93 count% or less, 92 count% or less, 91 count% or less, 90 count% or less, 85 count% or less, 80 count% or less, 75 count% or less, 70 count% or less, or 65 count% or less. This range relates to a range of suitable number of rubbery particles having medium particle diameters among the rubbery particles dispersed in case of dispersing the graft copolymer composition in a continuous phase including a curable resin. If condition (5) among the particle diameter distribution of the rubbery particles is satisfied, balance between dispersion viscosity and mechanical properties of a curable resin composition including the graft copolymer composition in a dispersion phase may be optimized.

According to an embodiment of the present invention, condition (6) represents the distribution on the rubbery particle content of large particle diameters, having particle diameters of from 350 nm to 550 nm, and the rubbery particles having particle diameters of from 350 nm to 550 nm may be 5 count% or more, 6 count% or more, 7 count% or more, 8 count% or more, 9 count% or more, 10 count% or more, 15 count% or more, 20 count% or more, 25 count% or more, or 30 count% or more and 50 count% or less, 45 count% or less, 40 count% or less, 35 count% or less, 30 count% or less, 25 count% or less, 20 count% or less, 15 count% or less, 10 count% or less, 9 count% or less, 8 count% or less, 7 count% or less or 6 count% or less. This range relates to a range of suitable number of rubbery particles having large particle diameters among the rubbery particles dispersed in case of dispersing the graft copolymer composition in a continuous phase including a curable resin. If condition (6) is satisfied among the particle diameter distribution of the rubbery particles, a distance among rubbery particles dispersed in a curable resin composition including the graft copolymer composition in a dispersion phase may increase to prevent the deterioration of mechanical properties due to a region absent from the graft copolymer composition. Here, the range of the rubbery particles having large particle diameters is referred to as from 350 nm to 550 nm, but the particle diameter range does not exclude the rubbery particles of large particle diameters, having particle diameters of greater than 550 nm, but represents the particle diameter range of the rubbery particles of large particle diameters showing the maximum particle diameter among the rubbery particles.

According to an embodiment of the present invention, the curable resin may be a thermosetting resin or a photocurable resin, particularly, one or more selected from the group consisting of an epoxy resin, a phenol resin, an unsaturated polyester resin, a melamine resin and a urea resin, more particularly, an epoxy resin.

According to an embodiment of the present invention, the epoxy resin may include at least two or more epoxy bonds, and may particularly be one or more selected from the group consisting of a bisphenol A-type epoxy resin, a bisphenol F-type epoxy resin, a bisphenol AD-type epoxy resin, a bisphenol E-type epoxy resin, a naphthalene-type epoxy resin, a biphenyl-type epoxy resin, a dicyclopentadiene-type epoxy resin, a phenol novolac-type epoxy resin, an aliphatic cyclic epoxy resin and a glycidyl amine-type epoxy resin.

The present invention provides a method of preparing the graft copolymer composition. The method of preparing a graft copolymer composition includes: a step of preparing a rubbery polymer latex including a rubbery polymer satisfying particle diameter distribution measured by capillary hydrodynamic fractionation (CHDF) of (1) to (3) (S1); and a step of injecting a graft monomer and graft polymerizing in the presence of 75 wt% to 85 wt% (based on the solid content) of the rubbery polymer latex to prepare a graft copolymer latex including a graft copolymer composition including multiple core-shell type graft copolymers (S2).

According to an embodiment of the present invention, in the method of preparing a graft copolymer composition, the type and amount of the monomer for performing each step may be the same as the type and amount of the monomer of the graft copolymer composition previously described.

According to an embodiment of the present invention, step (S1) is a step for preparing a rubbery polymer forming a core or a core layer in the core-shell type graft copolymer, characterized in preparing by controlling the particle diameter distribution of the rubbery polymer particles measured by capillary hydrodynamic fractionation (CHDF) to satisfy (1) to (3) above. Step (S2) is a step for forming a shell or a shell layer in a shell type wrapping the core, by the graft polymerization to the rubbery polymer.

According to an embodiment of the present invention, step (S1) and step (S2) may be performed by emulsion polymerization, and may be performed in the presence of an emulsifier and an initiator, together with an electrolyte, a molecular weight modifier, an activator, or the like, injected for emulsion polymerization. In this case, in performing step (S1), the particle diameter distribution of the rubbery polymer particles may be controlled by the injection amount of the emulsifier.

According to an embodiment of the present invention, the emulsifier may be one or more selected from the group consisting of a fatty acid-based emulsifier and a rosin acid-based emulsifier, and in this case, excellent effects of latex stability may be achieved.

According to an embodiment of the present invention, the injection amount of the emulsifier in step (S1) may be 0.1 parts by weight to 3.4 parts by weight, 1.0 part by weight to 3.3 parts by weight, 1.5 parts by weight to 3.2 parts by weight, 2.0 parts by weight to 3.2 parts by weight, or 2.1 parts by weight to 3.1 parts by weight, based on 100 parts by weight of the monomer for polymerizing the rubbery polymer, and within this range, the particle diameter distribution of the rubbery polymer particles may be controlled to satisfy (1) to (3) above.

According to an embodiment of the present invention, the injection amount of the emulsifier of step (S2) may be 0.1 parts by weight to 1.0 part by weight, 0.1 parts by weight to 0.5 parts by weight, or 0.1 parts by weight to 0.3 parts by weight based on 100 parts by weight of the total sum of the rubbery polymer and the monomer for polymerizing the graft copolymer, and within this range, effects of excellent latex stability may be achieved.

According to an embodiment of the present invention, step (S1) may be performed using a water-soluble initiator which may be used during emulsion polymerization, and the water-soluble initiator may be potassium persulfate, sodium persulfate, ammonium persulfate, or the like. Step (S2) may be performed by radical polymerization using a peroxide-based, redox, or azo-based initiator which may be sued for emulsion polymerization, and the redox initiator may be, for example, one or more selected from the group consisting of t-butyl hydroperoxide, diisopropylbenzene hydroperoxide and cumene hydroperoxide, and in this case, effects of providing stable polymerization environment may be achieved. If the redox initiator is used, this step may be performed by further including ferrous sulfide, sodium ethylenediaminetetraacetate and sodium formaldehyde sufoxylate as a redox catalyst that is an activator, and the weight average molecular weight of the shell may be controlled to 40,000 g/mol or less by controlling the injection amounts of the redox initiator and the redox catalyst.

According to an embodiment of the present invention, step (S2) may be performed by continuously injecting a graft monomer. In performing step (S2), if the graft monomer is injected in batch prior to the initiation of the graft polymerization reaction, problems of increasing the weight average molecular weight of the shell may arise.

According to an embodiment of the present invention, the emulsion polymerization of step (S1) and step (S2) may be performed in an aqueous solvent, and the aqueous solvent may be ion exchange water.

According to an embodiment of the present invention, the method of preparing a graft copolymer composition may include a step of agglomerating and drying for obtaining the graft copolymer latex prepared in step (S2) as a particulate phase (S3).

The present invention provides a curable resin composition. The curable resin composition may include the graft copolymer composition as an impact reinforcing agent, and in a particular embodiment, the graft copolymer composition may be dispersed in a particulate phase.

According to an embodiment of the present invention, the curable resin composition may include a continuous phase and a dispersion phase, the continuous phase may include a curable resin, and the dispersion phase may include a graft copolymer composition. In a particular embodiment, the curable resin composition may include: the continuous phase in 50 wt% to 99 wt%, 50 wt% to 80 wt%, or 50 wt% to 70 wt%; and the dispersion phase in 1 wt% to 50 wt%, 20 wt% to 50 wt%, or 30 wt% to 50 wt%.

According to an embodiment of the present invention, the curable resin may be a thermosetting resin or a photocurable resin, particularly, one or more selected from the group consisting of an epoxy resin, a phenol resin, an unsaturated polyester resin, a melamine resin and a urea resin, more particularly, an epoxy resin.

According to an embodiment of the present invention, the epoxy resin may include at least two or more epoxy bonds, particularly, one or more selected from the group consisting of a bisphenol A-type epoxy resin, a bisphenol F-type epoxy resin, a bisphenol AD-type epoxy resin, a bisphenol E-type epoxy resin, a naphthalene-type epoxy resin, a biphenyl-type epoxy resin, a dicyclopentadiene-type epoxy resin, a phenol novolac-type epoxy resin, an aliphatic cyclic epoxy resin and a glycidyl amine-type epoxy resin.

According to an embodiment of the present invention, the curable resin composition may have the number of the rubbery particles observed when enlarging at 15,000 magnification using a transmission electron microscope of a specimen in which 8 parts by weight of the dispersion phase is dispersed based on 100 parts by weight of the continuous phase of 200 to 500. In a particular embodiment, the number of the rubbery particles may be 200 or more, 210 or more, 220 or more, 230 or more, 240 or more, 250 or more, 260 or more, 270 or more, 280 or more, 290 or more, 300 or more, 350 or more, 400 or more, or 450 or more, and 500 or less, 490 or less, 480 or less, 470 or less, 460 or less, 450 or less, 400 or less, 350 or less, 300 or less, 290 or less, 280 or less, 270 or less, 260 or less, or 250 or less. This range relates to a suitable range of the rubbery particles dispersed in the curable resin composition, and within this range, the distance among rubbery particles dispersed in the curable resin composition may be most effectively controlled to achieve excellent effects of both dispersion viscosity and mechanical properties.

According to an embodiment of the present invention, the curable resin composition may have the particle diameter distribution of the rubbery particles observed when enlarging at 15,000 magnification using a transmission electron microscope of a specimen in which 8 parts by weight of the dispersion phase is dispersed based on 100 parts by weight of the continuous phase, satisfying (4) to (6) below. In this case, the rubbery particles may be derived from the core in the graft copolymer composition included in the dispersion phase, and the particle diameter distribution of the rubbery particles may be controlled by the particle diameter distribution of the core in the graft copolymer composition included in the dispersion phase.
(4) rubbery particles having particle diameters of 30 nm to less than 100 nm are from 0 wt% to 5 wt%,
(5) rubbery particles having particle diameters of 100 nm to less than 350 nm are from 50 wt% to 95 wt%, and
(6) rubbery particles having particle diameters of 350 nm to 550 nm are from 5 wt% to 50 wt%.

According to an embodiment of the present invention, condition (4) represents the distribution on the rubbery particle content of small particle diameters, having particle diameters of from 30 nm to less than 100 nm, and the rubbery particles having particle diameters of from 30 nm to less than 100 nm may be 0 count% or more, 1 count% or more, 2 count% or more, or 3 count% or more and 5 count% or less, 4 count% or less, 3 count% or less, or 2 count% or less. This range relates to the range of the suitable number of the rubbery particles having small particle diameters among the rubbery particles dispersed in the curable resin composition. In the curable resin composition, if condition (4) is satisfied among the particle diameter distribution of the rubbery particles, effects of minimizing the content of the rubbery particles having small particle diameters in the curable resin composition, or reducing viscosity by not being included, may be achieved. Here, the range of the rubbery particles having small particle diameters is referred to as from 30 nm to less than 100 nm, but the particle diameter range does not exclude the rubbery particles of small particle diameters, having particle diameters of less than 30 nm, but represents the particle diameter range of the rubbery particles of small particle diameters showing the minimum particle diameter among the rubbery particles.

According to an embodiment of the present invention, condition (5) represents the distribution on the rubbery particle content of medium particle diameters, having particle diameters of from 100 nm to less than 350 nm, and the rubbery particles having particle diameters of from 100 nm to less than 350 nm may be 50 count% or more, 55 count% or more, 60 count% or more, 65 count% or more, 70 count% or more, 75 count% or more, 80 count% or more, 85 count% or more, or 90 count% or more, and 95 count% or less, 94 count% or less, 93 count% or less, 92 count% or less, 91 count% or less, 90 count% or less, 85 count% or less, 80 count% or less, 75 count% or less, 70 count% or less, or 65 count% or less. This range relates to a range of suitable number of rubbery particles having medium particle diameters among the rubbery particles dispersed in the curable resin composition, and if condition (5) is satisfied among the particle diameter distribution of the rubbery particles in the curable resin composition, balance between dispersion viscosity and mechanical properties may be optimized.

According to an embodiment of the present invention, condition (6) represents the distribution on the rubbery particle content of large particle diameters, having particle diameters of from 350 nm to 550 nm, and the rubbery particles having particle diameters of from 350 nm to 550 nm may be 5 count% or more, 6 count% or more, 7 count% or more, 8 count% or more, 9 count% or more, 10 count% or more, 15 count% or more, 20 count% or more, 25 count% or more, or 30 count% or more and 50 count% or less, 45 count% or less, 40 count% or less, 35 count% or less, 30 count% or less, 25 count% or less, 20 count% or less, 15 count% or less, 10 count% or less, 9 count% or less, 8 count% or less, 7 count% or less or 6 count% or less. This range relates to a range of suitable number of rubbery particles having large particle diameters among the rubbery particles dispersed in the curable resin composition, and in the curable resin composition, if condition (6) is satisfied among the particle diameter distribution of the rubbery particles, the distance among rubbery particles dispersed in the curable resin composition may increase to prevent the deterioration of mechanical properties due to a region absent from the graft copolymer composition. Here, the range of the rubbery particles having large particle diameters is referred to as from 350 nm to 550 nm, but the particle diameter range does not exclude the rubbery particles of large particle diameters, having particle diameters of greater than 550 nm, but represents the particle diameter range of the rubbery particles of large particle diameters showing the maximum particle diameter among the rubbery particles.

According to an embodiment of the present invention, the curable resin composition may further include a curing agent in addition to the curable resin and the graft copolymer composition. The curing agent may be one or more selected from the group consisting of an acid anhydride curing agent, an amine-based curing agent and a phenol-based curing agent.

According to an embodiment of the present invention, the acid anhydride curing agent may be one or more selected from the group consisting of phthalic anhydride, methyltetrahydrophthalic anhydride, methylhexahydrophthalic anhydride, hexahydrophthalic anhydride, tetrahydrophthalic anhydride, trialkyl tetrahydrophthalic anhydride, methyl himic anhydride, methylcyclohexene dicarboxylic anhydride, trimellitic anhydride, pyromellitic anhydride, benzophenonetetracarboxylic anhydride, ethylene glycol bistrimellitate, glycerol tristrimellitate, dodecenyl succinic anhydride, polyazellaic anhydride and poly (ethyl octadecane diacid) anhydride.

According to an embodiment of the present invention, the amine-based curing agent may be one or more selected from the group consisting of 2,5(2,6)-bis(aminomethyl) bicyclo[2,2,1]heptane, isophoronediamine, ethylenediamine, diethylenetriamine, triethylenetetramine, tetraethylenepentamine, diethyl aminopropylamine, bis(4-amino-3-methyl dicyclohexyl)methane, diaminocyclohexylmethane, bis(aminomethyl) cyclohexane, metaphenylenediamine, diaminophenylmethane, diaminodiphenylsulfone, diaminodiethyl diphenylmethane, diethyl toluenediamine, 3,3'-diaminodiphenylsulfone (3,3'-DDS), 4,4'-diaminodiphenylsulfone (4,4'-DDS), diaminodiphenyl ether (DADPE), bisaniline, benzyl dimethylaniline, 3,3'-dichloro-4,4'-diaminodiphenylmethane (MOCA), 4,4'-diaminodiphenylmethane, 2,4'-diaminodiphenylmethane, 3,3'-diaminodiphenylmethane, 3,4'-diaminodiphenylmethane, 2,2'-diaminobiphenyl, 3,3'-diaminobiphenyl, 2,4-diaminophenol, 2,5-diaminophenol, o-phenylenediamine, m-phenylenediamine, p-phenylenediamine, 2,3-tolylene diamine, 2,4-tolylene diamine, 2,5-tolylene diamine, 2,6-tolylene diamine, 3,4-tolylene diamine, methyl thio toluene diamine, diethyl toluenediamine and dicyandiamide.

According to an embodiment of the present invention, the phenol-based curing agent may be one or more selected from the group consisting of a phenol novolac resin, a cresol novolac resin, bisphenol A, bisphenol F, bisphenol AD and diallyl derivatives of bisphenols.

According to an embodiment of the present invention, the curable resin composition may further include an additive in addition to the curable resin and the graft copolymer composition. The additive may be a releasing agent such as silicon oil, natural wax, and synthetic wax; a particulate material such as crystalline silica, molten silica, calcium silicate and alumina; fiber such as glass fiber and carbon fiber; a flame retardant such as antimony trioxide; a halogen trapping agent such as hydrotalcite and rare earth oxides; a colorant such as carbon black and iron oxide red; and a silane coupling agent.

In addition, the present invention provides a method of preparing a curable resin composition for preparing the curable resin composition.

According to an embodiment of the present invention, the method of preparing a curable resin composition includes: a step of preparing a graft copolymer latex including the graft copolymer composition (S10); a step of agglomerating and drying the graft copolymer latex prepared in step (S10) to prepare a graft copolymer particulate material (S20); and a step of mixing a curable resin and the graft copolymer particulate material prepared in step (S20) to prepare a curable resin composition (S30), wherein step (S30) is performed by dispersing using a stirrer.

According to an embodiment of the present invention, step (S10) is a step for preparing the graft copolymer composition and may be performed by the method of preparing a graft copolymer described above.

According to an embodiment of the present invention, step (S20) is a step for obtaining the graft copolymer prepared in step (S10) as a particulate material and may be performed by agglomerating and drying the graft copolymer latex prepared in step (S10).

According to an embodiment of the present invention, the agglomeration of step (S20) may be performed by adding a coagulant to the graft copolymer latex. In addition, the agglomeration of step (S20) may be performed by acid agglomeration such as an aqueous sulfuric acid solution and by salt agglomeration such as sodium chloride and sodium sulfate, and both the acid agglomeration and the salt agglomeration may be performed as necessary. In this case, the acid agglomeration and the salt agglomeration may be performed simultaneously or step by step. If the agglomeration is performed step by step, the acid agglomeration may be performed first, and then, the salt agglomeration may be performed, or the salt agglomeration may be performed first, and then, the acid agglomeration may be performed. In addition, the agglomeration of step (S20) may be performed in the presence of an organic dispersant as necessary.

According to an embodiment of the present invention, the drying of step (S20) may be performed by a common drying method, and a step of dewatering the agglomerated graft copolymer latex may be further included prior to the drying as necessary.

According to an embodiment of the present invention, step (S30) is a step of mixing the curable resin and the graft copolymer by the above-described particulate phase dispersion method in applying the graft copolymer to the curable resin as an impact reinforcing agent, and may be performed by injecting the graft copolymer particulate material to the curable resin and mixing. As described above, the graft copolymer according to the present invention has excellent particulate dispersibility and may be directly dispersed in the curable resin in a particulate phase. In a particular embodiment, the viscosity of the curable resin composition prepared in step (S30) may be 2,000 Pa.s or less, 1,900 Pa.s or less, 1,800 Pa.s or less, 1,700 Pa.s or less, 1,600 Pa.s or less, 1,590 Pa.s or less, 1,580 Pa.s or less, 1,570 Pa.s or less, 1,560 Pa.s or less, 1,550 Pa.s or less, 1,540 Pa.s or less, 1,530 Pa.s or less, 1,520 Pa.s or less, 1,510 Pa.s or less, 1,500 Pa.s or less, 1,450 Pa.s or less, 1,400 Pa.s or less, 1,350 Pa.s or less, or 1,300 Pa.s or less, and 100 Pa.s or more, 200 Pa.s or more, 300 Pa.s or more, 400 Pa.s or more, 500 Pa.s or more, 600 Pa.s or more, 700 Pa.s or more, 800 Pa.s or more, 900 Pa.s or more, 1,000 Pa.s or more, 1,100 Pa.s or more, 1,200 Pa.s or more, 1,250 Pa.s or more, 1,300 Pa.s or more, 1,350 Pa.s or more, 1,400 Pa.s or more, 1,450 Pa.s or more, 1,500 Pa.s or more, 1,500 Pa.s or more, or 1,550 Pa.s or more, at 25°C. Within this range, the viscosity of the graft copolymer particulate material is low, and dispersibility is excellent.

In addition, the present invention provides an adhesive composition including the curable resin composition. The adhesive composition may include the curable resin composition as a toughening agent.

According to an embodiment of the present invention, the adhesive composition may include a main agent, a urethane resin, a curing agent, a curing accelerator and a filler, which may be used in an adhesive, in addition to the toughening agent.

Hereinafter, embodiments of the present invention will be explained in detail so that a person skilled in the art could easily perform the present invention. However, the present invention may be accomplished in various other types and is not limited to the embodiments explained herein.

### Examples and Comparative Examples

### Example 1

### <Preparation of rubbery polymer latex>

To a polymerization reactor (autoclave) substituted with nitrogen, 75 parts by weight of ion exchange water, 60 parts by weight of 1,3-butadiene, 1.4 parts by weight of potassium rosinate, 0.6 parts by weight of potassium oleate, 0.9 parts by weight of potassium carbonate (K₂CO₃), 0.3 parts by weight of t-dodecylmercaptan, and 0.3 parts by weight of potassium persulfate (K₂S₂O₈) were added in batch, based on total 100 parts by weight of 1,3-butadiene, and polymerization was performed at a reaction temperature of 70°C. Then, 0.7 parts by weight of potassium oleate was injected in batch, at a point where a polymerization conversion ratio reached 30% to 40%, 20 parts by weight of 1,3-butadiene was injected in batch, and polymerization was continued at a reaction temperature of 70°C. Then, after a polymerization conversion ratio reached 60%, 20 parts by weight of 1,3-butadiene was injected in batch, a reaction temperature was raised to 80°C, polymerization was continuously performed, and the reaction was finished at a point where a polymerization conversion ratio reached 95%. Total time consumed for the polymerization was 23 hours, the gel content of a rubbery polymer latex obtained was 76%, and the average particle diameter of rubbery polymer particles was 301 nm.

In this case, the polymerization conversion ratio was calculated as the ratio of the solid weight of the rubbery polymer thus obtained with respect to the solid weight of monomers injected.

### <Preparation of graft copolymer latex>

To a closed polymerization reactor substituted with nitrogen, based on total 100 parts by weight of the rubbery polymer latex (based on the solid content), methyl methacrylate, n-butyl acrylate and styrene, 80 parts by weight of the rubbery polymer latex prepared based on the solid content was injected, and 200 parts by weight of ion exchange water, 0.2 parts by weight of potassium oleate, 0.036 parts by weight of ferrous sulfide, 0.2 parts by weight of sodium ethylenediaminetetraacetate, 0.2 parts by weight of sodium formaldehyde sulfoxylate and 0.4 parts by weight of t-butyl hydroperoxide were injected in batch. Then, while continuously injecting 16 parts by weight of methyl methacrylate, 3 parts by weight of n-butyl acrylate and 1 part by weight of styrene for 3 hours, polymerization was performed at a reaction temperature of 60°C for 4 hours to prepare a graft copolymer latex. The final polymerization conversion ratio was 98.3%, and the average particle diameter of the graft copolymer particles was 313 nm.

The polymerization conversion ratio was calculated as the ratio of the solid weight of the graft copolymer thus obtained with respect to the solid weight of the rubbery polymer and monomers injected.

### <Preparation of graft copolymer particulate material>

The graft copolymer latex thus prepared was diluted in distilled water so as to be 15 wt% based on the solid content, the resultant was added to an agglomeration bath, and the internal temperature of the agglomeration bath was raised to 45°C. After that, an IR1076 antioxidant was injected based on 100 parts by weight of the solid content of the graft copolymer, stirring was performed while adding an aqueous sulfuric acid solution to agglomerate, a graft copolymer and water were separated, and dewatering and drying were performed to prepare a graft copolymer particulate material.

### Example 2

The same method as in Example 1 was performed except for injecting 1.0 part by weight of the potassium rosinate instead of 1.4 parts by weight, and 0.4 parts by weight of the potassium oleate instead of 0.6 parts by weight, and injecting 0.6 parts by weight of the potassium oleate instead of 0.7 parts by weight at a point where a polymerization conversion ratio reached 30% to 40% during preparing the rubbery polymer latex, in Example 1. In this case, the average particle diameter of the rubbery polymer particles prepared was 333 nm, and the average particle diameter of the graft copolymer particles was 340 nm.

### Example 3

The same method as in Example 1 was performed except for injecting 1.2 parts by weight of the potassium rosinate instead of 1.4 parts by weight, and 0.5 parts by weight of the potassium oleate instead of 0.6 parts by weight, and injecting 0.9 parts by weight of the potassium oleate instead of 0.7 parts by weight at a point where a polymerization conversion ratio reached 30% to 40% during preparing the rubbery polymer latex, in Example 1. In this case, the average particle diameter of the rubbery polymer particles prepared was 295 nm, and the average particle diameter of the graft copolymer particles was 308 nm.

### Comparative Example 1

The same method as in Example 1 was performed except for injecting 0.8 parts by weight of the potassium oleate instead of 0.7 parts by weight at a point where a polymerization conversion ratio reached 30% to 40% during preparing the rubbery polymer latex, in Example 1. In this case, the average particle diameter of the rubbery polymer particles prepared was 290 nm, and the average particle diameter of the graft copolymer particles was 300 nm.

### Comparative Example 2

The same method as in Example 1 was performed except for injecting 1.5 parts by weight of the potassium rosinate instead of 1.4 parts by weight, and injecting 0.6 parts by weight of the potassium oleate instead of 0.7 parts by weight at a point where a polymerization conversion ratio reached 30% to 40% during preparing the rubbery polymer latex, in Example 1. In this case, the average particle diameter of the rubbery polymer particles prepared was 287 nm, and the average particle diameter of the graft copolymer particles was 299 nm.

### Comparative Example 3

The same method as in Example 1 was performed except for injecting, based on the solid content, 70 parts by weight of the rubbery polymer latex instead of 80 parts by weight, 24 parts by weight of the methyl methacrylate instead of 16 parts by weight, 4 parts by weight of the n-butyl acrylate instead of 3 parts by weight, and 2 parts by weight of the styrene instead of 1 part by weight during preparing the graft copolymer latex, in Example 1. In this case, the average particle diameter of the graft copolymer particles prepared was 318 nm.

### Experimental Examples

### Experimental Example 1

With respect to the rubbery polymers and graft copolymers prepared in Examples 1 to 3 and Comparative Examples 1 to 3, the average particle diameters of cores and graft copolymers, and the particle diameter distribution of cores were measured by methods below and are shown in Tables 1 and 2 together with the content of each component and the injection method of a graft monomer during preparing a graft copolymer.
* Average particle diameter (nm) of core and graft copolymer: Each of rubbery polymer latexes and graft copolymer latexes prepared in Examples 1 to 3 and Comparative Examples 1 to 3, was diluted in distilled water in a concentration of 200 ppm, and the average particle diameter was measured using a dynamic light scattering (DSL) method according to ISO 22412 using NICOMP 380.
* Particle diameter distribution of core (wt%): 0.1 g of each of the rubbery polymer latexes prepared in Examples 1 to 3 and Comparative Examples 1 to 3 was diluted in 100 g of distilled water to prepare a specimen, and the particle diameter distribution of core was measured using a capillary hydrodynamic fractionation (CHDF) analysis equipment (Model 4000 of Matec Applied Science Co.) . In this case, the particle diameter distribution of the core was measured by injecting the specimen in a microcapillary using a syringe, and separating particles in latex using a movement rate difference of particles in the specimen. During the measurement, the inner temperature of the microcapillary was kept to 35°C. With respect to the particle diameter distribution measured, distribution was classified according to conditions (1) to (3) below.
   (1) a weight ratio of core particles having particle diameters of 30 nm to less than 100 nm
   (2) a weight ratio of core particles having particle diameters of 100 nm to less than 350 nm
   (3) a weight ratio of core particles having particle diameters of 350 nm to 550 nm

**[Table 1]**

| Division | | | Example | | |
|---|---|---|---|---|---|
| | | | 1 | 2 | 3 |
| Core | Rubbery polymer | (parts by weight) | 80 | 80 | 80 |
| | Average particle diameter | (nm) | 301 | 333 | 295 |
| | 30 nm ≤ particle diameter < 100 | (wt%) | 0 | 0 | 3 |
| | 100 nm ≤ particle diameter < 350 | (wt%) | 85 | 55 | 90 |
| | 350 nm ≤ particle diameter ≤ 550 | (wt%) | 15 | 45 | 7 |
| Shell | Methyl methacrylate | (parts by weight) | 16 | 16 | 16 |
| | n-butyl acrylate | (parts by weight) | 3 | 3 | 3 |
| | Styrene | (parts by weight) | 1 | 1 | 1 |
| | Graft monomer injection method | | Contin uous | Contin uous | Contin uous |
| Graft copolymer | Average particle diameter | (nm) | 313 | 340 | 308 |

**[Table 2]**

| Division | | | Comparative Example | | |
|---|---|---|---|---|---|
| | | | 1 | 2 | 3 |
| Core | Rubbery polymer | (parts by weight) | 80 | 80 | 70 |
| | Average particle diameter | (nm) | 290 | 287 | 301 |
| | 30 nm ≤ particle diameter < 100 | (wt%) | 5 | 0 | 0 |
| | 100 nm ≤ particle diameter < 350 | (wt%) | 90 | 97 | 85 |
| | 350 nm ≤ particle diameter ≤ 550 | (wt%) | 5 | 3 | 15 |
| Shell | Methyl methacrylate | (parts by weight) | 16 | 16 | 24 |
| | n-butyl acrylate | (parts by weight) | 3 | 3 | 4 |
| | Styrene | (parts by weight) | 1 | 1 | 2 |
| | Graft monomer injection method | | Contin uous | Contin uous | Conti nuous |
| Graft copolymer | Average particle diameter | (nm) | 300 | 299 | 318 |

As shown in Tables 1 and 2 above, it could be confirmed that the graft copolymer compositions of Examples 1 to 3, prepared according to the present invention were prepared to have the core contents in the multiple graft copolymers in the graft copolymer compositions and the particle diameter distribution of the cores in ranges defined in the present invention.

Meanwhile, it could be confirmed that Comparative Examples 1 and 2 have the particle diameter distribution of the cores of multiple graft copolymers in the graft copolymer compositions, deviated from the range defined in the present invention.

In addition, it could be confirmed that the core content of Comparative Example 3 was lower than the range defined in the present invention.

### Experimental Example 2

By using the graft copolymer particulate materials prepared in Examples 1 to 3 and Comparative Examples 1 to 3, specimens were prepared to by a method below to observe a number of rubbery particles when enlarged at 15,000 magnification using a transmission electron microscope for specimens in which 8 parts by weight of a dispersion phase including a graft copolymer composition was dispersed based on 100 parts by weight of a continuous phase including a curable resin.

### <Preparation of specimen>

100 parts by weight of an epoxy resin (Kukdo Chemical Co., YD-128), 8 parts by weight of the graft copolymer particulate material prepared above, 10 parts by weight of a curing agent (Evonik Co., Dicyanex 1400F), and 1 part by weight of a curing accelerator (Evonik Co., Amicure UR7/10) were mixed using a paste mixer (KM Tech Co., PDM-300). In an aluminum dish with a diameter of 5 cm, the mixed compound was put and cured at 180°C for 5 minutes to prepare a specimen having a diameter size of 5 cm.

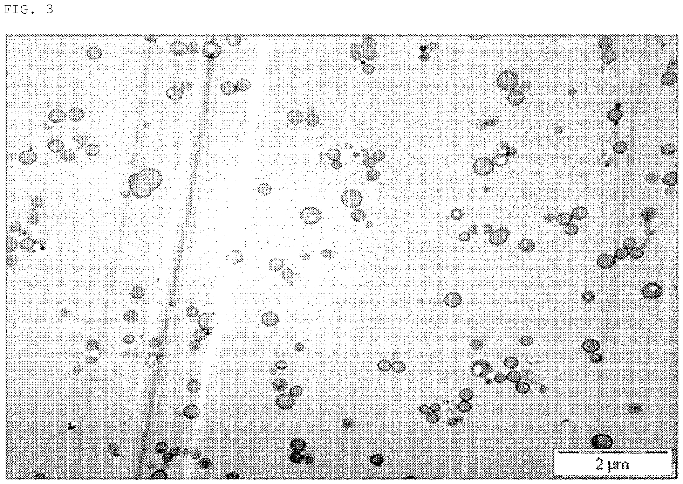

With respect to the specimen thus prepared, a photographic image was taken at 15,000 magnification using a transmission electron microscope, and the number of rubber particles and the particle diameter distribution of the rubber particles observed were confirmed and shown in Tables 3 and 4 below. The photographic image of a transmission electron microscope on the specimen of the epoxy resin composition in which the graft copolymer composition of Example 1 was dispersed, is shown in FIG. 3.

**[Table 3]**

| Division | | | Example | | |
|---|---|---|---|---|---|
| | | | 1 | 2 | 3 |
| Rubber particl es | Number | (number) | 298 | 248 | 455 |
| | 30 nm ≤ particle diameter < 100 | (wt%) | 2 | 3 | 4 |
| | 100 nm ≤ particle diameter < 350 | (wt%) | 86 | 64 | 91 |
| | 350 nm ≤ particle diameter ≤ 550 | (wt%) | 12 | 33 | 5 |

**[Table 4]**

| Division | | | | Comparative Example | |
|---|---|---|---|---|---|
| | | | 1 | 2 | 3 |
| Rubber particl es | Number | (number) | 520 | 510 | 202 |
| | 30 nm ≤ particle diameter < 100 | (wt%) | 6 | 3 | 2 |
| | 100 nm ≤ particle diameter < 350 | (wt%) | 90 | 95 | 86 |
| | 350 nm ≤ particle diameter ≤ 550 | (wt%) | 4 | 2 | 12 |

As shown in Tables 3 and 4, it could be confirmed that rubber particles derived from the cores of the graft copolymer compositions were uniformly dispersed in the epoxy resin compositions including the graft copolymer compositions of Examples 1 to 3, prepared according to the present invention.

On the contrary, it could be confirmed that the rubber particles were localized, and dispersibility was not uniform in Comparative Example 1 in which the ratio of the core particles having small particle diameters was high, the ratio of the core particles having large particle diameters was low, and the particle diameter distribution of the core defined in the present invention was unsatisfied, and in Comparative Example 2 in which the ratio of the core particles having middle particle diameters was high, the ratio of the core particles having large particle diameters was low, and the particle diameter distribution of the core defined in the present invention was unsatisfied.

In addition, it could be confirmed that, though the core having the same particle diameter distribution as in Example 1 was included, Comparative Example 3 showed low number of the rubber particles.

### Experimental Example 3

Epoxy resin composition specimens in which the graft copolymer compositions were dispersed in the curable resin compositions were prepared by using the graft copolymer particulate materials prepared in Examples 1 to 3 and Comparative Examples 1 to 3 and by the method below. For the epoxy resin compositions in which the graft copolymer compositions of Examples 1 to 3 and Comparative Examples 1 to 3 were dispersed, the dispersion states of the graft copolymers were confirmed by a method below, and viscosity was measured and shown in Tables 5 and 6 below.

### <Preparation of epoxy resin composition specimen in which graft copolymer composition is dispersed>

To a revolution-rotation mixer (planetary mixer, KMTECH, KPLM-0.6) set to 70°C, 60 parts by weight of an epoxy resin (Kukdo Chemical Co., YD-128), and 40 parts by weight of the graft copolymer particulate material prepared in each of Examples 1 to 3 and Comparative Examples 1 to 3 were injected, based on total 100 parts by weight of the epoxy resin and the graft copolymer, and the graft copolymer particulate material was dispersed in the epoxy resin by stirring at 10 rpm for 1 hour, at 80 rpm for 2 hours, and at 60 rpm for 10 hours to prepare an epoxy resin composition in which the graft copolymer was dispersed.

Then, to prepare a specimen, 100 parts by weight of an epoxy resin (Kukdo Chemical Co., YD-128), 25 parts by weight of the epoxy resin composition prepared above, 10 parts by weight of a curing agent (Evonik Co., Dicyanex 1400F), and 1 part by weight of a curing accelerator (Evonik Co., Amicure UR7/10) were mixed using a paste mixer (KM Tech Co., PDM-300). In an aluminum dish with a diameter of 5 cm, the mixed compound was put and cured at 180°C for 5 minutes to prepare a specimen having a diameter size of 5 cm.

* Dispersion state: On a cold rolled (CR) steel having a size of 25 mm x 100 mm, an epoxy resin composition was applied to a thickness of 0.2 mm, and the number of particles observed with the naked eye was checked. In this case, if the number of the particles observed with the naked eye is small, the dispersion state represents excellent.

* 25°C viscosity (Pa.s): With respect to the epoxy resin composition prepared, the viscosity of 25°C was measured using Rheometer (Anton paar Co., MRC 302), and a viscosity value at a shear rate of 2.4 s⁻¹, 100 s is shown.

**[Table 5]**

| Division | | Example | | |
|---|---|---|---|---|
| | | 1 | 2 | 3 |
| Dispersion state | | 5 | 8 | 6 |
| 25°C viscosity | (Pa.s) | 1,509 | 1,290 | 1,558 |

**[Table 6]**

| Division | | Comparative Example | | |
|---|---|---|---|---|
| | | 1 | 2 | 3 |
| Dispersion state | | 9 | 4 | 6 |
| 25°C viscosity | (Pa.s) | 2,120 | 1,820 | 2, 650 |

As shown in Tables 5 and 6, it could be confirmed that the curable resin composition in which the graft copolymer of the present invention was applied in a particulate phase as an impact reinforcing agent, had a sufficient dispersion state of the graft copolymer particulate material as well as a low viscosity at 25°C and excellent dispersibility.

On the contrary, it could be confirmed that Comparative Example 1 in which the ratio of the core particles having small particle diameters was high, the ratio of the core particles having large particle diameters was low, and the particle diameter distribution of the core defined in the present invention was unsatisfied, showed increased viscosity, and Comparative Example 2 in which the ratio of the core particles having middle particle diameters was high, the ratio of the core particles having large particle diameters was low, and the particle diameter distribution of the core defined in the present invention was unsatisfied, showed insufficient improvement of viscosity.

In addition, it could be confirmed that, though the core having the same particle diameter distribution as in Example 1 was included, Comparative Example 3 in which the core content was low, viscosity was very high, and dispersibility was inferior.

### Experimental Example 4

By using the epoxy resin composition prepared in Experimental Example 3, a structural adhesive composition was prepared by a method below.

### <Preparation of structural adhesive composition>

An epoxy resin (Kukdo Chemical Co., YD-128) as a main agent, an epoxy resin composition (a weight ratio of epoxy resin: graft copolymer particulate material = 60: 40) according to each of Examples 1 to 3 and Comparative Examples 1 to 3, prepared in Experimental Example 2 as a toughening agent, a urethane resin (Adeka Co., QR-9466), a diluent (Kukdo Chemical Co., KF EPI0L DE208), a curing agent (Evonik Co., Dicyanex 1400F), a curing accelerator (Evonik Co., Amicure UR7/10), potassium oxide (Youyeong Materials Co., UNI-OX), and fumed silica (Carbot Co., CAB-O-SIL TS-720) were mixed in the amounts recorded in Tables 5 and 6 below, using a paste mixer (KMTECH Co., PDM-300) at 600 rpm revolution and at 500 rpm rotation for 3 minutes, and defoamed at 600 rpm revolution and at 200 rpm rotation for 5 minutes to prepare an adhesive composition. In this case, the amount of each component was injected based on 100 parts by weight of the total amount of the main agent, the toughening agent, the urethane resin and the diluent.

With respect to the structural adhesive composition prepared, impact peel strength was measured by a method below and shown in Tables 7 and 8 below.
* Impact peel strength (N/mm): Impact peel strength of the structural adhesive composition prepared was measured according to the standard of ISO 11343. The size of a specimen was 90 mm x 20 mm x 1.6 T (mm), and the size of one side for applying the adhesive composition was 30 mm x 20 mm. Contaminants were removed from the one side of the specimen using ethanol, and the structural adhesive composition prepared was applied. The thickness of the adhesive composition was maintained constant using microbeads, the top was covered with another specimen to fix, and curing was performed at 180°C for 30 minutes. After curing, the resultant was stabilized at 25°C and -40°C for 1 hour or more each, and a load was applied in a rate of 2 m/sec using an impact strength tester (Instron Co., 9350) to measure impact peel strength according to a shear strength.

**[Table 7]**

| Division | | | Example | | |
|---|---|---|---|---|---|
| | | | 1 | 2 | 3 |
| Structural adhesive composition | Main agent | (parts by weight) | 60.0 | 60.0 | 60.0 |
| | Tougheni ng agent | (parts by weight) | 15.0 | 15.0 | 15.0 |
| | Urethane resin | (parts by weight) | 20.0 | 20.0 | 20.0 |
| | Diluent | (parts by weight) | 5.0 | 5.0 | 5.0 |
| | Curing agent | (parts by weight) | 6.0 | 6.0 | 6.0 |
| | Curing accelera tor | (parts by weight) | 0.6 | 0.6 | 0.6 |
| | Calcium oxide | (parts by weight) | 3.0 | 3.0 | 3.0 |
| | Fumed silica | (parts by weight) | 3.0 | 3.0 | 3.0 |
| Impact peel strength | 25°C | (N/m) | 33.4 | 34.5 | 34.5 |
| | -40°C | (N/m) | 29.1 | 28.9 | 29.7 |

**[Table 8]**

| Division | | | Comparative Example | | |
|---|---|---|---|---|---|
| | | | 1 | 2 | 3 |
| Structural adhesive composition | Main agent | (parts by weight) | 60.0 | 60.0 | 60.0 |
| | Tougheni ng agent | (parts by weight) | 15.0 | 15.0 | 15.0 |
| | Urethane resin | (parts by weight) | 20.0 | 20.0 | 20.0 |
| | Diluent | (parts by weight) | 5.0 | 5.0 | 5.0 |
| | Curing agent | (parts by weight) | 6.0 | 6.0 | 6.0 |
| | Curing accelera tor | (parts by weight) | 0.6 | 0.6 | 0.6 |
| | Calcium oxide | (parts by weight) | 3.0 | 3.0 | 3.0 |
| | Fumed silica | (parts by weight) | 3.0 | 3.0 | 3.0 |
| Impact peel strength | 25°C | (N/m) | 34.5 | 33.5 | 32.1 |
| | -40°C | (N/m) | 29.8 | 29.3 | 26.8 |

As shown in Tables 7 and 8, if the curable resin compositions of the present invention were applied as the toughening agents to the adhesive composition, it could be confirmed that impact peel strengths at room temperature (25°C) and low temperature (-40°C) of the structural adhesive composition were all excellent.

From such results, it could be confirmed that the graft copolymer of the present invention has excellent particulate dispersibility with respect to a curable resin such as epoxy resin, and could be dispersed in a curable resin composition by a particulate phase dispersion method, and accordingly, the productivity of the curable resin composition is excellent, and mechanical properties such as impact resistance could be improved by the graft copolymer dispersed in the curable resin composition.

## Claims

1. A graft copolymer composition comprising multiple graft copolymers having different core particle diameters,
wherein the graft copolymer is a core-shell type graft copolymer comprising a core comprising a rubbery polymer; and a shell formed by graft polymerizing a graft monomer comprising an alkyl (meth)acrylate-based monomer to the rubbery polymer,
the multiple graft copolymers comprise the core in 75 wt% to 90 wt%, and
a number of rubbery particles observed by enlarging at 15,000 magnification using a transmission electron microscope of a specimen in which 8 parts by weight of a dispersion phase comprising a graft copolymer composition is dispersed based on 100 parts by weight of a continuous phase comprising a curable resin, is from 200 to 500.

2. The graft copolymer composition according to claim 1, wherein the core satisfies particle diameter distribution measured by capillary hydrodynamic fractionation (CHDF) as the following (1) to (3):
(1) core particles having particle diameters of 30 nm to less than 100 nm are from 0 wt% to 4 wt%,
(2) core particles having particle diameters of 100 nm to less than 350 nm are from 50 wt% to 94 wt%, and
(3) core particles having particle diameters of 350 nm to 550 nm are from 6 wt% to 50 wt%.

3. The graft copolymer composition according to claim 1, wherein the rubbery polymer comprises one or more monomer units selected from the group consisting of a conjugated diene-based monomer unit and an alkyl acrylate-based monomer unit.

4. The graft copolymer composition according to claim 1, wherein the graft monomer comprises a methyl (meth)acrylate monomer, an alkyl (meth)acrylate-based monomer of 2 to 12 carbon atoms and a crosslinkable monomer.

5. The graft copolymer composition according to claim 4, wherein the crosslinkable monomer is polyethylene glycol diacrylate or allyl methacrylate.

6. The graft copolymer composition according to claim 1, wherein the graft monomer further comprises an aromatic vinyl-based monomer.

7. The graft copolymer composition according to claim 1, wherein the multiple graft copolymers comprise the core in 75 wt% to 85 wt% and the shell in 15 wt% to 25 wt%.

8. The graft copolymer composition according to claim 1, wherein the multiple graft copolymers have an average core particle diameter of 250 nm to 350 nm.

9. The graft copolymer composition according to claim 1, wherein particle diameter distribution of the rubbery particles observed by enlarging at 15,000 magnification using a transmission electron microscope of a specimen in which 8 parts by weight of a dispersion phase comprising a graft copolymer composition is dispersed based on 100 parts by weight of a continuous phase comprising a curable resin, satisfies the following:
(4) rubbery particles having particle diameters of 30 nm to less than 100 nm are from 0 count% to 5 count%,
(5) rubbery particles having particle diameters of 100 nm to less than 350 nm are from 50 count% to 95 count%, and
(6) rubbery particles having particle diameters of 350 nm to 550 nm are from 5 count% to 50 count%.

10. The graft copolymer composition according to claim 1, wherein the curable resin is an epoxy resin.

11. A curable resin composition comprising a continuous phase and a dispersion phase, wherein
the continuous phase comprises a curable resin, and
the dispersion phase comprises the graft copolymer composition according to any one of claim 1 to claim 10.

12. The curable resin composition according to claim 11, wherein the curable resin composition comprises the continuous phase in 50 wt% to 99 wt% and the dispersion phase in 1 wt% to 50 wt%.

13. A method of preparing a curable composition, the method comprising:
a step of preparing a graft copolymer latex comprising the graft copolymer composition according to any one of claim 1 to claim 10 (S10);
a step of agglomerating and drying the graft copolymer latex prepared in step (S10) to prepare a graft copolymer particulate material (S20); and
a step of mixing a curable resin and the graft copolymer particulate material prepared in step (S20) to prepare a curable resin composition (S30),
wherein step (S30) is performed by dispersing using a stirrer.

14. The method of preparing a curable resin composition according to claim 13, wherein a viscosity of the curable resin composition prepared in step (S30) is 2,000 Pa.s or less at 25°C.
